# EUROPÄISCHE PATENTANMELDUNG

(11) **EP 0 762 583 A2**
(43) Veröffentlichungstag der Anmeldung: **12.03.1997**
(21) Anmeldenummer: 96112267.8
(22) Anmeldetag: 29.07.1996
(51) Int. Cl.: H02B 1/21

(54) **Niederspannungs-Sammelschienensystem**

(30) Priorität: 21.08.1995 DE 19530659
(71) Anmelder: WEBER AG, CH-6020 Emmenbrücke (CH)
(72) Erfinder: Schmid, Daniel, 6048 Horw (CH)
(74) Vertreter: Hug Interlizenz AG

(57) **Zusammenfassung**

Das berührungssicher aufbaubare Sammelschienensystem verwendet rechteckige Sammelschienen (1), die von schmalen Sammelschienenträgern (2) hochkant nebeneinander gehalten werden. Die Montage elektrischer Installations-Einbau-Geräte (17) auf den Sammelschienen erfolgt mittels Adaptern (10). Die Adapter (10) sind mit Steckkontakttuplen versehen und werden direkt senkrecht zur Sammelschienenebene auf die Sammelschienen (1) aufgesteckt. Die Steckkontakttulpen sind bestimmten Sammelschienen (1) jeweils fest zugeordnet, so dass zur Kontaktierung unterschiedlicher Sammelschienen (1) unterschiedliche Adapter (10) verwendet werden müssen. Diese sind vorzugsweise durch farbige Markierung unterschieden. Zur mechnischen Befestigung der Adapter (10) auf den Sammelschienen (1) dient ein im Adapter integrierter Schieber (18). Die Verbindung zwischen den Installations-Einbau-Geräten (17) und den Adaptern (10) erfolgt mechanisch durch Aufschnappen und elektrisch über ein Litzenstück (16), das am Adapter (10) vermittels einer Klemme lösbar angeschlossen ist. Durch Lösen dieser Klemme können die Installations-Einbau-Geräte (17) unter Spannung gefahrlos ausgetauscht werden, wobei der volle Berührungschutz erhalten bleibt.

## Beschreibung

### TECHNISCHES GEBIET

Die vorliegende Erfindung bezieht sich auf ein Sammelschienensystem für elektrische Installations-Einbau-Geräte mit Ein- und Abgangsklemmen zur Niederspannungsverteilung, wobei
- die Sammelschienen einen rechteckigen Querschnitt aufweisen und in einer Ebene parallel nebeneinander hochkant angeordnet sind,
- der Abstand der beiden äussersten Sammelschienen kleiner als die Länge der Installations-Einbau-Geräte quer zu den Sammelschienen ist,
- zum Anschliessen von einpoligen Installations-Einbau-Geräten Adapter entsprechender Länge und Breite vorgesehen sind,
- an den Adaptern unterseitig zu den Sammelschienen hin jeweils nur eine Steckkontakttulpe zur Kontaktierung einer der Sammelschienen vorgesehen ist, und
- die Adapter die Sammelschienen quer zu ihrer Längsrichtung vollständig abdecken.

### STAND DER TECHNIK

Ein Sammelschienensystem dieser Art ist bekannt aus dem deutschen Gebrauchsmuster G 69 11 488. Bei dem bekannten System sind die Sammelschienen in einer leitenden, auf Masse liegenden C-Schiene geführt. Die elektrische Verbindung zwischen der Steckkontakttulpe und der Anschlussklemme des Installations-Einbau-Geräts erfolgt im Adapter über eine Metallplatte und einen mit der Metallplatte einstückigen Anschlussbügel. Dieser dient auch zur mechanischen Befestigung des Installations-Einbau-Geräts auf dem Adapter. Ein weiterer, der Befestigung des Installations-Einbau-Geräts sowie als Massekontakt dienender Metallbügel am Adapter stützt sich auf der C-Schiene ab, welche damit in die mechanische Halterung des Adapters sowie des Installations-Einbau-Geräts einbezogen wird. Die wesentliche Haltefunktion übernimmt die Steckkontakttulpe. Auf dem bekannten Adapter lassen sich Installations-Einbau-Geräte heutiger Bauart gemäss DIN 43880 nicht ohne weiteres montieren. Die metallische C-Schiene ist recht gross und daher ein teures Bauteil. Der Berührungsschutz ist nur solange gewährleistet, wie das Installations-Einbau-Gerät auf dem Adapter montiert ist. Die Installations-Einbau-Geräte können unter Spannung deshalb nicht gefahrlos ausgetauscht werden.

### DARSTELLUNG DER ERFINDUNG

Es ist Aufgabe der vorliegenden Erfindung, ein Sammelschienensystem zur Niederspannungsverteilung anzugeben, welches, wie das bekannte, folgende Anforderungen erfüllt:
- es soll sehr platzsparend und kompakt sein;
- es soll im fertig montierten Zustand berührungssicher sein;
- der Anschluss der Installations-Einbau-Geräte soll an beliebiger Stelle an jede der Sammelschienen möglich sein Zusätzlich soll:
- der Austausch eines Installations-Einbau-Geräts unter Spannung möglich sein, ohne dass darunter die Berührungssicherheit leidet;
- das System einfach zu installieren sein, insbesondere was die Montage der Installations-Einbau-Geräte auf den Adaptern anbetrifft;
- es soll einfach und kostengünstig herstellbar sein; und
- es sollen verschiedene Arten handelsüblicher Installations-Einbau-Geräte gemäss DIN 43880 ohne jede Veränderung verwendbar sein, ggf. sogar solche, welche keinen elektrischen Kontakt zu den Sammelschienen benötigen.

Diese Aufgabe wird gemäss der Erfindung gelöst durch ein Sammelschienensystem, wie es im Patentanspruch 1 gekennzeichnet ist.

Das erfindungsgemässe Sammelschienensystem für elektrische Installations-Einbau-Geräte gemäss DIN 43880 ist demnach dadurch gekennzeichnet, dass
- am Adapter eine mit der Steckkontakttulpe elektrisch verbundene Klemme vorgesehen und zwischen dieser Klemme und der Eingangsklemme des Installations-Einbau-Geräts ein Litzenstück verwendet ist,
- die Adapter auf ihrer Oberseite mit einer Hutprofilschiene zum Aufschnappen der Installations-Einbau-Geräte versehen sind, und
- zur Halterung der Sammelschienen mindestens zwei, im Vergleich zur Längserstreckung der Sammelschienen schmale Sammelschienen-Träger vorgesehen sind.

Durch die Verwendung einer zusätzlichen Klemme am Adapter und eines Litzenstücks zwischen dieser Klemme und der Anschlussklemme des Installations-Einbau-Geräts ist es möglich, das Gerät unter Spannung auszutauschen, indem zunächst das Litzenstück an der zusätzlichen Klemme am Adapter gelöst wird. Indem der Adapter die Sammelschienen vollständig abdeckt, besteht auch bei abgenommenem Gerät Berührungssicherheit.

Durch die am Adapter vorgesehene Hutprofilschiene sind handelsübliche Installations-Einbau-Geräte einfach aufschnappbar. Die Kontaktierung des Installations-Einbau-Geräts vermittels des Litzenstücks hat den Vorteil, dass praktisch alle Arten handelsüblicher Geräte ohne irgendwelche Modifikationen verwendbar sind. Sofern das Litzenstück weggelassen wird, können vermittels der Adapter auch Geräte auf den Sammelschienen montiert werden, welche keinen elektrischen Anschluss zu den Sammelschienen benötigen.

Die verhältnismässig schmalen Sammelschienenträger tragen zur Kostengünstigkeit des erfindungsgemässen Sammelschienensystems bei. Gemäss einer bevorzugten Ausgestalung sind sie an beliebiger Stelle entlang der Sammelschienen, z.B.als Zwischenträger, vor allem aber an deren Enden montierbar. Sie können auch zur Halterung und Isolierung der Enden von in Längsrichtung aneinanderstossen Sammelschienen ausgebildet sein.

Durch die an den Adaptern vorgesehene Kontakttulpe und die hochkant nebeneinander angeordneten Sammelschienen ergibt sich eine besonders platzsparende Konstruktion. Zunächst benötigen die Sammelschienen wegen ihrer Hochkant-Anordnung senkrecht zu ihrer Längsrichtung nicht viel Platz und können vollständig unter den Installations-Einbau-Geräten angeordnet werden. Dies ist sogar dann noch möglich, wenn bis zu 5 Sammelschienen nebeneinander verwendet werden. Zum anderen können die Adapter direkt senkrecht zur Sammelschienenebene auf die Sammelschienen aufgesteckt werden. Eine bei anderen vorbekannten Sammelschienensystemen vielfach notwendige, quer zur Sammelschienen-Längsrichtung Platz benötigende Einhängebewegung ist nicht erforderlich.

Weitere vorteilhafte Ausgestaltungen der Erfindung sind in den abhängigen Ansprüchen gekennzeichnet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: ein erfindungsgemässes Sammelschienensystem mit verschiedenen Komponenten im desintegrierten Zustand;
- Fig. 2: das gleiche System fertig montiert;
- Fig. 3: eine Ausschnittsvergrösserung des Systems;
- Fig. 4: einen Sammelschienenträger in vergrösserter Darstellung;
- Fig. 5: einen einzelnen Adapter;
- Fig. 6: einen weiteren einzelnen Adapter, und
- Fig. 7: einen weiteren Sammelschienenträger mit zugehörigem Trenn- bzw. Endstück.

### WEGE ZUR AUSFÜHRUNG DER ERFINDUNG

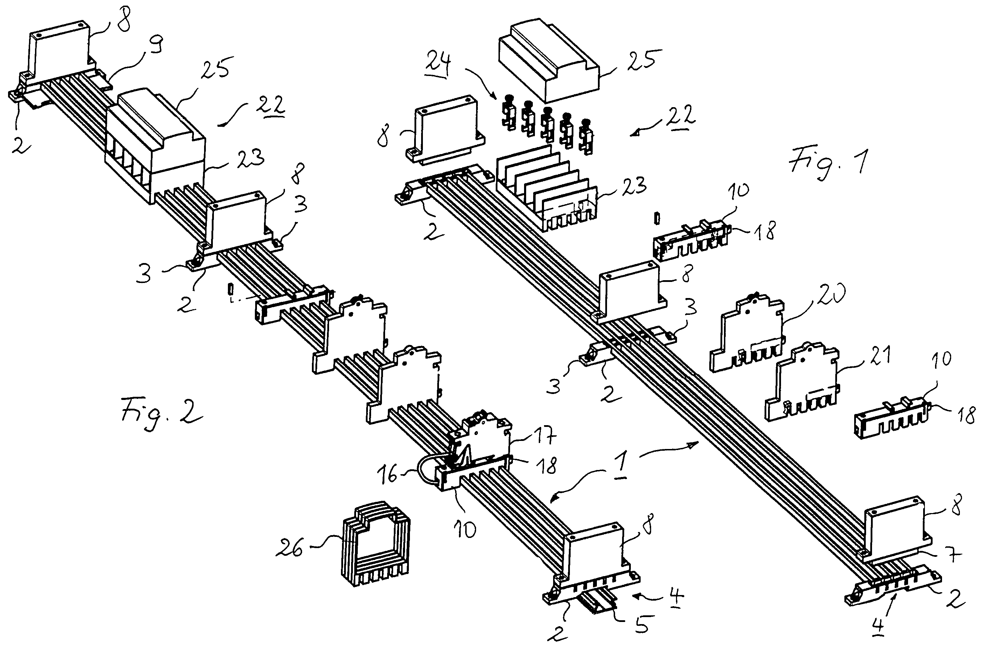

Die Figuren 1 und 2 zeigen das erfindungsgemässe Sammelschiensystem im Überblick. Mit 1 sind insgesamt fünf Sammelschienen mit rechteckigem Querschnitt bezeichnet, welche von Sammelschienenträgern 2 hochkant sowie in einer Ebene parallel nebeneinander gehalten werden. Die fünf Sammelschienen können z.B. den drei Phasen eines 380/400 Volt Drehstromnetzes sowie dem zugehörigen Neutral- und Schutzleiter zugeordnet sein.

Die Sammelschienenträger 2 sind als schmale Stege mit durchgängigen Quernuten für die Sammelschienen 1 ausgebildet. In den Quernuten sind die Sammelschienen gehalten. Von den Sammelschienenträgern 2 sind zwei in den Figuren 1 und 2 an den Sammelschienen-Enden montiert, während ein Sammelschienenträger als Mittelstütze verwendet ist. Die Sammelschienenträger 2 können vermittels ihrer beiderends angeformten Schraubfüsse 3 unmittelbar an einer Wand oder auf einer Montageplatte oder dergleichen angeschraubt werden. Mit Vorteil sind sie zusätzlich mit einer schwalbenschwanzförmigen Ausnehmung 4 versehen, wodurch sie alternativ auf eine Hutprofilschiene 5 aufgeschnappt werden können.

In Fig. 4 ist gezeigt, wie die Sammelschienenträger 2 zur Halterung der Enden von in Längsrichtung aneinanderstossen Sammelschienen 1 und 1' verwendet werden können. Um die aneinanderstossenden Sammelschienen 1, 1' bei Bedarf gegeneinander elektrisch zu isolieren, ist in den Sammelschienenträgern 2 ein in Fig. 4 erkennbarer Längsschlitz 6 vorgesehen, in welchen die Isolierzunge 7 eines Trennstücks 8 eingesteckt werden kann.

Wie dies in Fig. 2 anhand des Sammelschienenträgers 2 am linken oberen Sammelschienenende gezeigt ist, sind an den Sammelschienenträgern 2 seitlich beiderseits weitere Längsschlitze vorgesehen, in welche bei Bedarf Abdeckplatten 9 (gezeigt ist lediglich ein kurzes Stück einer solchen Abdeckplatte) zur rückseitigen Abschottung der Sammelschienen 1 eingeschoben werden können.

Die Montage von Installations-Einbau-Geräten aller Art auf den Sammelschienen 1 erfolgt mittels Adaptern 10, welche einfach quer auf die Sammelschienen aufgesteckt werden und zwar direkt senkrecht zur Sammelschienenebene.

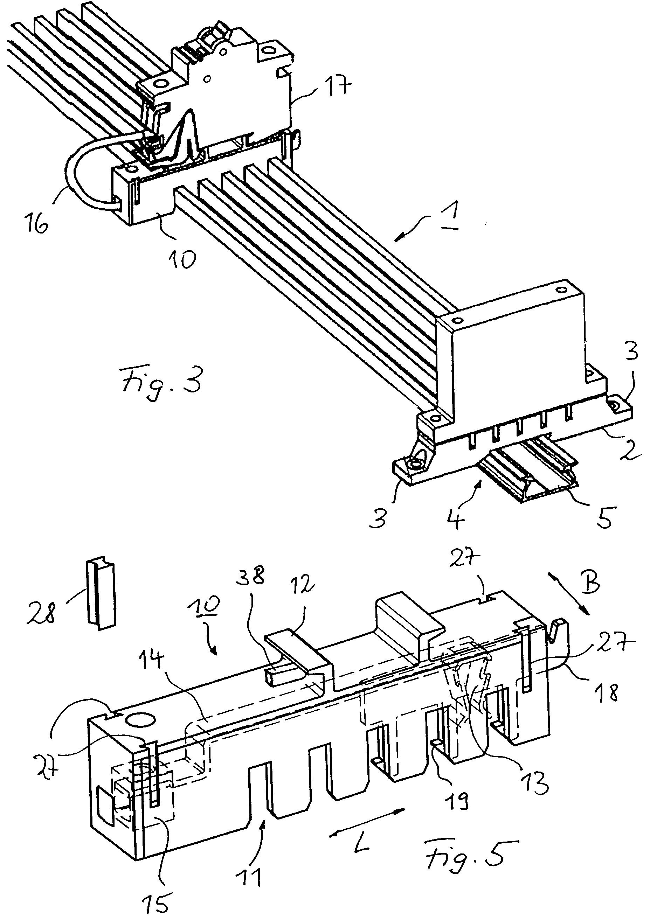

Einen solchen Adapter 10 zeigt Fig. 5 im Detail. Er weist ein oben geschlossenes, nach unten zu den Sammelschienen hin offenes Gehäuse aus Isolierstoff auf, dessen Seitenwände mit Ausnehmungen 11 versehen, die jeweils paarweise miteinander fluchten und an die Kontur der Sammelschienen 1 angepasst sind. Auf seiner Oberseite ist an das Gehäuse eine Hutprofilschiene 12 angeformt. Im Innern des Adaptergehäuses ist eine Steckkontakttulpe 13 am Ende einer Stromschiene 14 derart befestigt, dass sie mit einem Paar der Ausnehmungen 11 fluchtet. Die mit federnden Schenkeln versehene Steckkontakttulpe 13 umgreift, wenn der Adapter 10 auf die Sammelschienen aufgesetzt wird, eine der Sammelschienen 1 von beiden Seiten und stellt einen sicheren Kontakt zu ihr her. Die Stromschiene 14 führt im Adaptergehäuse bis zu einer der beiden Stirnseiten des Adapters und einer in dort angeordneten Kontaktklemme 15. Die Kontaktklemme 15 dient, wie insbesondere in Fig. 3 zu erkennen ist, zum Anschluss eines Endes eines Litzenstücks 16, dessen anderes Ende zum Anschluss an der Eingangsklemme eines auf die Hutprofilschiene 12 des Adapters 10 aufgeschnappten Installations-Einbau-Geräts 17 vorgesehen ist. Als Installations-Einbau-Gerät 17 ist in Fig. 2 und Fig. 3 ein handelsüblicher Schaltautomat für den Leitungsschutz dargestellt. Bezüglich seiner Breite B entspricht der Adapter 10 der gemäss DIN 43880 genormten Breite einpoliger Installations-Einbau-Geräte. Bezüglich seiner Länge L ist er etwas länger als diese, um den Zugang zur Klemmschraube der Klemme 15 von oben her zu ermöglichen. Zur mechanischen Befestigung und Sicherung des Adapters 10 auf den Sammelschienen 1 ist schliesslich im Adaptergehäuse noch ein Schieber 18 vorgesehen, welcher mit den Ausnehmungen 11 zusammenwirkt und mit die Sammelschienen (mindestens zwei) hintergreifenden Haltenasen 19 versehen ist. Der Schieber 18 ist in Verriegelungsrichtung federnd vorgespannt. Der Steckkontakttuple 13 kommt, wenn der Schieber 18 in seiner Verriegelungsstellung ist, keine Haltefunktion mehr zu. Die Steckkontaktulpe 13 ist zusammen mit dem Stromleiter 14 vielmehr mit etwas Spiel im Adaptergehäuse befestigt, um sich an die zu kontaktierende Sammelschiene anpassen und Anstandstoleranzen der Sammelschienen ausgleichen zu können.

An bzw. unter der Hutprofilschiene 12 kann einseitig, wie in Fig. 5 erkennbar, noch ein kleiner Nocken 38 angeformt sein. Dieser ist dazu vorgesehen, in einen entsprechenden Schlitz in den Installations-Einbau-Geräten einzugreifen und so als einfache Verdrehsicherung für diese zu dienen.

Bei den Adaptern 10 gemäss der vorliegenden Erfindung ist die Steckkontakttulpe 13 stets einer bestimmten Sammelschiene fest zugeordnet. Daraus resultiert ein Satz unterschiedlicher Adapter, welche mit Vorteil optisch voneinander unterschieden sind, z.B. durch farbige Markierung. Andererseits kann jeder Adapter an beliebiger Position entlang der Sammelschienen montiert werden. Bei Verwendung verschiedener Farben für unterschiedliche Adaptertypen ist am fertig installierten System sofort erkennbar welches Gerät auf welche Sammelschiene zugreift.

Die Figuren 1 und 2 zeigen als weitere Beispiele nützlicher Systemkomponenten eine Neutralleiter- 20 sowie eine Erdungsklemme 21 von jeweils "halber Breite" mit bereits angeformtem Adapterteil. Zur Stromeinspeisung auf die Sammelschienen dient der Einspeiseblock 22, welcher aus einem Einspeisesockel 23 mit Eingriffsnuten für die Sammelschienen, Einspeiseklemmen 24 sowie einer Einspeiseabdeckung 25 besteht. Der Einspeisesockel 23 nimmt die Einspeiseklemmen 24 auf und stellt die Isolierung der Phasen gegeneinander sicher. Auch der Einspeiseblock 22 kann an beliebiger Stelle entlang der Sammelschienen 1 montiert werden. Der Einspeisesockel kann schliesslich auch noch mit (nicht dargestellten) Mitteln, wie Riegeln oder dergleichen, versehen sein zu seiner wenigstens vorrübergehenden Befestigung auf den Sammelschienen 1, solange die Einspeiseklemmen 24 noch nicht montiert oder festgezogen sind.

Das vorbeschriebene Sammelschienensystem kann berührungssicher aufgebaut werden. Allfällige Lücken zwischen einzelnen Systemkomponenten können mit speziellen Blindabdeckprofilen 26 gefüllt werden. Indem z.B. das Litzenstück 16 zuerst an der Adapterklemme 15 gelöst wird, kann ein Installations-Einbau-Gerät 17, selbst wenn die Sammelschienen unter Spannung stehen, gefahrlos ausgetauscht werden, da die Adapter die Sammelschienen vollständig abdecken.

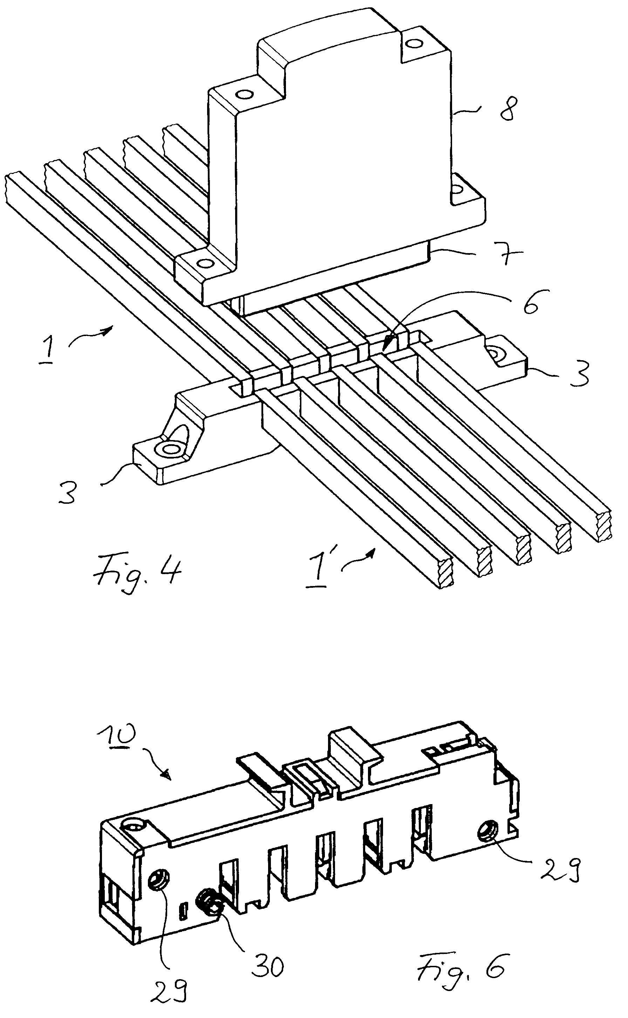

Die Adapter 10 können schliesslich noch mit Mitteln zur gegenseitigen mechanischen Kopplung versehen sein. Solche Mittel sind z.B. die in Fig. 5 erkennbaren schwalbenschwanzförmigen Nuten 27, in welche kurze Verbindungsprofilstücke 28 eingesteckt werden. Alternativ können in den Adaptern als Verbindungsmittel seitlich auch Löcher 29 vorgesehen sein, welche mit Verbindungsstiften 30 zusammenwirken, wie dies Fig. 6 zeigt.

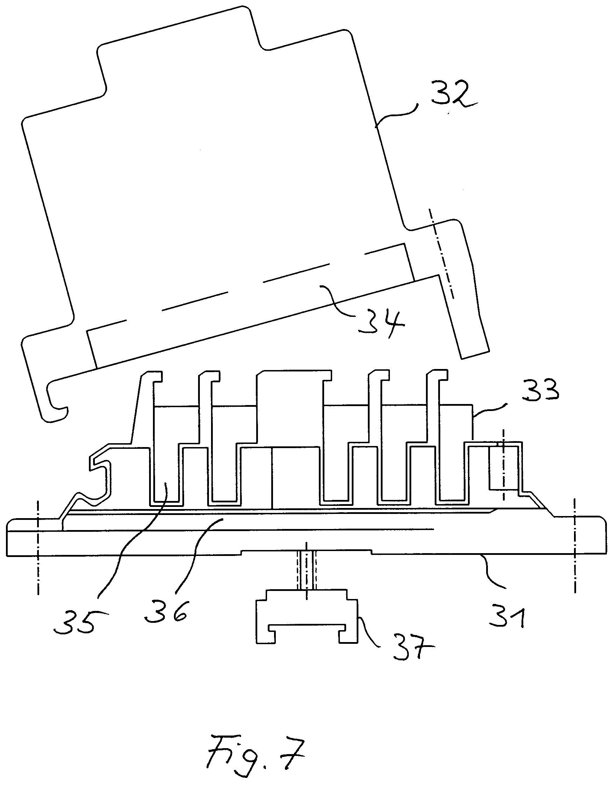

Fig. 7 zeigt noch einen weiteren Sammmelschienen-Träger 31 in einer Seitenansicht (die andere ist spiegelbildlich) mit zugehörigem Aufsteck-, Trenn- oder Endstück 32. Im Unterschied zu dem Sammelschienen-Träger 3 und dem Trennstück 8 von Fig. 4 ist hier am Sammelschienen-Träger 31 eine zentrale Trennwand 33 zur gegenseitigen Isolierung der in Längsrichtung aneinanderstossenden Sammelschienen vorgesehen. Die Trennwand 33 greift in einen Schlitz 34 im Trennstück 32 ein, wenn dieses auf den Sammelschienen-Träger 31 aufgesetzt ist. Die Nuten 35 zur Halterung der Enden der Sammelschienen sind hier nicht durchgehend. Das Endstück weist die äussere Kontur eines typischen Standart-Installations-Einbaugerätes auf. In den seitlichen Längsschlitz 36 kann wieder eine Abdeckplatte bei Bedarf eingeschoben werden. Zwecks Montage auf einer C-Profilschiene ist ein in die C-Schiene einführbares und darin verspannbares Klemmstück 37 vorgesehen. Selbstverständlich könnte auch wieder eine schwalbenschwanzförmigen Ausnehmung vorgesehen sein.

## Patentansprüche

1. Sammelschienensystem für elektrische Installations-Einbau-Geräte gemäss DIN 43880 zur Niederspannungsverteilung, wobei
• die Sammelschienen (1) einen rechteckigen Querschnitt aufweisen und in einer Ebene parallel nebeneinander hochkant angeordnet sind,
• der Abstand der beiden äussersten Sammelschienen kleiner als die Länge der Installations-Einbau-Geräte (17) quer zu den Sammelschienen ist,
• zum Anschliessen von einpoligen Installations-Einbau-Geräten (17) Adapter (10) etwa entsprechender Länge (L) und gleicher Breite (B) vorgesehen sind,
• an den Adaptern (10) unterseitig zu den Sammelschienen hin jeweils eine Steckkontakttulpe (13) zur Kontaktierung einer der Sammelschienen (1) vorgesehen ist, und
• die Adapter (10) die Sammelschienen (10) vollständig abdecken,
dadurch gekennzeichnet, dass
• am Adapter (10) eine mit der Steckkontakttulpe (13) elektrisch verbundene Klemme (15) vorgesehen ist,
• zwischen der genannten Klemme (15) und der Eingangsklemme des Installations-Einbau-Geräts (17) ein Litzenstück (16) verwendet ist,
• die Adapter (10) auf ihrer Oberseite mit einer Hutprofilschiene (12) zum Aufschnappen der Installations-Einbau-Geräte (17) versehen sind, und
• zur Halterung der Sammelschienen (1) mindestens zwei, im Vergleich zur Längserstreckung der Sammelschienen schmale Sammelschienen-Träger (2,31) vorgesehen sind.

2. Sammelschienensystem nach Anspruch 1, dadurch gekennzeichnet, dass die Adapter (10) ein zu den Sammelschienen hin offenes Isolierstoffgehäuse aufweisen, dessen Seitenwände mit paarweise fluchtenden Ausnehmungen (11) für die Sammelschienen (1) versehen sind.

3. Sammelschienensystem nach Anspruch 2, dadurch gekennzeichnet, dass in dem Isolierstoffgehäuse ein Schieber (18) mit wenigstens zwei der Sammelschienen hintergreifenden Haltenasen (19) längsbeweglich und vorzugsweise federbelastet geführt ist.

4. Sammelschienensystem nach einem der Ansprüche 2 oder 3, dadurch gekennzeichnet, dass die Klemme (15) im Bereich einer Stirnseite des Adapters (10) im Innern des Isolierstoffgehäuses angeordnet ist.

5. Sammelschienensystem nach einem der Ansprüche 1 bis 4, dadurch gekennzeichnet, dass innerhalb der Adapter ein Stromleiter (14) von der Steckkontakttulpe (13) zu der Klemme (15) geführt ist.

6. Sammelschienensystem nach einem der Ansprüche 1 bis 5, dadurch gekennzeichnet, dass mehr als drei Sammelschienen (1), vorzugsweise fünf Sammelschienen (1), parallel nebeneinander verwendet sind.

7. Sammelschienensystem nach einem der Ansprüche 1 bis 6, dadurch gekennzeichnet, dass die Sammelschienen-Träger (2) an beliebiger Stelle entlang der Sammelschienen (1), insbesondere auch an deren Enden, auf einer Montageplatte und/oder einer Hutprofilschiene (5) montierbar sind.

8. Sammelschienensystem nach Anspruch 7, dadurch gekennzeichnet, dass die Sammelschienen-Träger (2) zur Halterung der Enden von in Längsrichtung aneinanderstossenden Sammelschienen (1,1') ausgebildet sind und vorzugsweise einen Längsschlitz (6) zur Aufnahme eines Trennstücks (7,8) zur gegenseitigen Isolierung der in Längsrichtung aneinanderstossenden Sammelschienen (1,1') aufweisen.

9. Sammelschienensystem nach Anspruch 7, dadurch gekennzeichnet, dass die Sammelschienen-Träger (31) zur Halterung der Enden von in Längsrichtung aneinanderstossenden Sammelschienen ausgebildet und zur gegenseitigen Isolierung der in Längsrichtung aneinanderstossenden Sammelschienen mit einer Trennwand (33) versehen sind.

10. Sammelschienensystem nach Anspruch 9, dadurch gekennzeichnet, dass ein Trennstück (32) zum Aufstecken auf die Sammelschienen-Träger (31) vorgesehen ist, welches einen Längsschlitz (34) zur Aufnahme der an den Sammelschienen-Trägern (31) vorgesehenen Trennwand (33) aufweist.

11. Sammelschienensystem nach einem der Ansprüche 1 bis 10, dadurch gekennzeichnet, dass an den Sammelschienen-Trägern (2,31) seitlich beiderseits Längsschlitze (36) vorgesehen, in welche bei Bedarf Abdeckplatten (9) zur rückseitigen Abschottung der Sammelschienen 1 eingeschoben werden können.

12. Sammelschienensystem nach einem der Ansprüche 1 bis 11, dadurch gekennzeichnet, dass die Zuordnung der Kontakttulpen (13) zu einer bestimmten Sammelschiene (Phase) an den Adaptern (10) fest vorgegeben ist und dass die Phasenzuordnung an den Adaptern (10), vorzugsweise durch farbige Markierung, kenntlich gemacht ist.

13. Sammelschienensystem nach einem der Ansprüche 1 bis 12, dadurch gekennzeichnet, dass die Steckkontakttulpen (13) in den Adaptern (10) zwecks Ausgleich von Abstandstoleranzen der Sammelschienen (1) geringfügig beweglich angebracht sind.

14. Sammelschienensystem nach einem der Ansprüche 1 bis 13, dadurch gekennzeichnet, dass zwecks Abdeckung der Sammelschienen (1) in Lücken zwischen Installations-Einbau-Geräten (17) Blindabdeckprofile (26) vorgesehen sind, die bezüglich ihrer äusseren Form etwa der Kombination eines Installations-Einbau-Geräts (17) und eines Adapters (10) entsprechen.

15. Sammelschienensystem nach einem der Ansprüche 1 bis 14, dadurch gekennzeichnet, dass an den Adaptern (10) Mittel, insbesondere Schwalbenschwanznuten (27), zur Kopplung mehrerer Adapter zu mehrpoligen Adapterblöcken vorgesehen sind.

16. Sammelschienensystem nach einem der Ansprüche 1 bis 15, dadurch gekennzeichnet, dass zur Stromeinspeisung in die Sammelschienen (1) ein Einspeiseblock (22) vorgesehen ist, welcher in einem Einspeisesockel (23) mehrere Einspeiseklemmen (24) aufweist.

17. Sammelschienensystem nach Anspruch 16, dadurch gekennzeichnet, dass zur Stromeinspeisung in die Sammelschienen (1) ein Einspeiseblock (22) vorgesehen ist, welcher mit Mitteln zur wenigstens vorübergehenden Befestigung auf den Sammelschienen (1) versehen ist.
